# EUROPÄISCHE PATENTSCHRIFT

(11) **EP 1 198 320 B1**
(45) Veröffentlichungstag und Bekanntmachung des Hinweises auf die Patenterteilung: **22.09.2004**
(21) Anmeldenummer: 00956256.2
(22) Anmeldetag: 21.07.2000
(51) Int. Cl.: B23D 77/04

(54) **WERKZEUG**
TOOL
OUTIL

(30) Priorität: 21.07.1999 DE 29912751 U; 24.05.2000 DE 10025064
(43) Veröffentlichungstag der Anmeldung: 24.04.2002
(73) Patentinhaber: Rothenaicher, Stefan, 87746 Erkheim (DE)
(72) Erfinder: Rothenaicher, Stefan, 87746 Erkheim (DE)
(74) Vertreter: Pfister, Stefan Helmut Ulrich
(86) Internationale Anmeldenummer: PCT/EP2000/007043
(87) Internationale Veröffentlichungsnummer: WO 2001/007191

(56) Entgegenhaltungen:
- US-A- 1 451 742
- US-A- 1 635 067
- US-A- 2 145 370

## Beschreibung

Die Erfindung betrifft ein Werkzeug, insbesondere zur reibenden oder spanabhebenden Bearbeitung, mit mehreren gegen ein Werkstück anstellbaren Schneidplatten, die an einem Werkzeugträger befestigt sind und eine durch eine rotierende Bewegung des Werkzeuges längs der Werkstückoberfläche bewegte Schneidkante aufweisen, wobei die Schneidplatten in eine Aufnahme des Werkzeugträgers eingesetzt sind und über Befestigungsmittel in der Aufnahme gehalten sind.

Ein derartiges Werkzeug ist aus der deutschen Offenlegungsschrift 24 34 041 bekannt und wird beispielsweise als Reibahle oder Fräswerkzeug in der metall- oder holzverarbeitenden Industrie eingesetzt. Die Schneidplatte des Werkzeuges ist während des Betriebes einem Verschleiß unterworfen, so dass sie nach einer bestimmten Einsatzdauer ausgewechselt werden muss.

Im Falle einer Hartmetallschneidplatte ist es bekannt, diese in den Werkzeugträger einzulöten. Dies hat den Nachteil, dass das spröde Hartmetallmaterial durch die erforderliche Hartlotverbindung bis zur Rotglut aufgeheizt werden muss und durch die Wärmeabfuhr über den Werkzeugträger Spannungsrisse aufgrund der hohen Temperaturunterschiede im Material unvermeidbar sind.

Ferner sind Gefügeänderungen aufgrund der hohen Temperaturen im Material der Schneidplatte unvermeidlich, so dass innerhalb bestimmter Grenzen eine nicht vorhersehbare Änderung der Materialeigenschaften erfolgt. Schließlich besteht die Gefahr, dass beim Einlöten der Hartmetallschneideplatte in den Werkzeugträger diese falsch justiert wird und so der Durchmesser des durch das Werkzeug bearbeiteten Bereiches verändert wird.

Die aus der deutschen Offenlegungsschrift 2434041 bekannte Reibahle ist als verstellbare Mehrmesser-Maschinenreibahle ausgebildet, die mehrere Schneidplatten mit zur Rotationsachse des Werkzeuges parallelen Schneidkanten aufweist. Diese Schneidplatten sind über eine Schraubverbindung mit dem Werkzeugträger verbunden, so dass sie einfach eingesetzt und festgeschraubt werden können, wobei der Werkzeugträger gleichzeitig eine Einstellmöglichkeit für den äußeren Radius der von den Schneidkanten beschriebenen Kreisbahn aufweist. Die Einzellagerung der Schneidplatte in dem Werkzeugträger ermöglicht zwar das einzelne Austauschen der Schneidplatte, erfordert andererseits jedoch ein aufwendiges Justier- und Messverfahren der ausgetauschten Schneidplatten. Darüber hinaus ist eine verhältnismäßig filigrane und aufwendige Ausgestaltung des Werkzeugträgers notwendig, damit die Schraubverbindungen realisiert werden können und die Schneidplatte muss eine Bohrung aufweisen, durch die die Schraube in den Werkzeugträger hineingeschraubt werden kann. Dies macht sowohl die Herstellung des Werkzeugträgers als auch der Schneidplatten aufwendiger und damit kostenintensiver.

Ein weiterer Nachteil der bekannten Reibahle besteht darin, dass bei mehreren Schneidplatten alle Schneidplatten einzeln justiert und eingestellt werden müssen, was einerseits aufwendig ist, andererseits jedoch die Gefahr in sich birgt, dass die Schneidkanten nicht auf einer einheitlichen Kreisbahn liegen, so dass tatsächlich nur einige wenige der Schneidplatten mit dem Werkstück in Eingriff kommen. In diesem Fall würden diese Schneidplatten einem erhöhten Verschleiß unterworfen werden, bis diese so weit verschlissen sind, dass dann eine einheitliche Justierung vorliegt, wobei hierdurch zum einen die Bearbeitungsqualität leidet und zum anderen einige der Schneidkanten bereits nicht mehr scharf sind, während andere noch den Neuzustand aufweisen. Dies führt zu einer ungleichmäßigen Schneid- und Reibbewegung, was wiederum eine ungleichmäßige Belastung in Form einer Unwucht auf den Werkzeugträger verursacht und zu einer weiteren Erhöhung des Verschleißes des Werkzeuges beiträgt.

Aufgabe der Erfindung ist daher, ein Werkzeug zur spanabhebenden Bearbeitung zu schaffen, dass leicht einstellbar ist und eine leichte und sichere Wechselmöglichkeit der Schneidplatte aufweist.

Diese Aufgabe wird nach der Erfindung durch ein Werkzeug, insbesondere zur reibenden oder spanabhebenden Bearbeitung, mit mehreren gegen ein Werkstück anstellbaren Schneidplatten gelöst, bei dem die Schneidplatten an einem Werkzeugträger befestigt sind und jeweils eine durch eine rotierende Bewegung des Werkzeuges entlang eine auf der Werkstückoberfläche bewegte Schneidkante aufweisen, wobei die Schneidplatten in eine Aufnahme des Werkzeugträgers eingesetzt sind, die die Schneidplatten in den Aufnahmen festspannen, das sich dadurch auszeichnet, daß ein gemeinsames Spannmittel für mehrere oder alle Schneidplatten vorgesehen ist, welches einen rechtwinklig zur Schneidplatte wirkenden Druck auf die Aufnahme ausübt, infolge des Druckes die Längsschlitze zusammengedrückt und so die Schneidplatten eingespannt sind.

Bevorzugt ist hierfür das Werkzeug derart ausgebildet, dass der Werkzeugträger einen unteren Trägerkörper und einen als Hohlkörper ausgebildeten Werkzeugkopf aufweist, der mit einem als Schaft ausgebildeten Ende in eine Kopfaufnahme des Werkzeugträgers eingesetzt ist, und die Aufnahme von einem in dem Werkzeugkopf angeordneten, durchgängigen und sich bis in die Kopfaufnahme erstreckenden Längsschlitz gebildet ist, wobei der untere Trägerkörper über eine Spannschraube mit dem Werkzeugkopf verbunden ist, die den Schaft in die Kopfaufnahme zu drücken und so einen radialen Druck der Kopfaufnahme auf den Schaft aufzubringen vermag, wobei durch den radialen Druck der Längsschlitz zusammengedrückt und die Schneidplatte in dem Längsschlitz eingespannt ist.

Durch die erfindungsgemäße Ausgestaltung des Werkzeuges kann leicht und einfach die Schneidplatte im Werkzeugträger befestigt werden. Hierzu wird die Schneidplatte in den Längsschlitz eingesetzt, der bevorzugt so ausgebildet ist, dass sich eine leichte Übergangspassung zwischen der Schneidplatte und der Seitenwandung des Längsschlitzes ergibt, so dass die Schneidplatte auch im ungespannten Zustand ausreichend fixiert ist. Anschließend wird der Werkzeugträger auf den oberen Trägerkörper aufgesteckt und über die Spannschraube mit diesem verbunden. Hierbei wird der Schaft in die Kopfaufnahme zunächst eingesteckt und durch die Zugkraft der Spannschraube anschließend in die Aufnahme eingezogen.

Die innere Mantelfläche der Kopfaufnahme übt zumindest mit einem Teilbereich einen radialen Druck auf den Schaft des käfigartig ausgebildeten Werkzeugkopfes aus, wobei dieser in radialer Richtung leicht zusammengedrückt wird und die Seitenwandung des Längsschlitzes gegen die Seitenwände der Schneidplatte gepresst werden. Hierdurch wird die Schneidplatte im Längsschlitz fixiert und das Werkzeug ist einsatzbereit.

Die erfindungsgemäßen Werkzeuge werden bevorzugt als Reibahle oder Fräswerkzeuge eingesetzt, wobei die Schneidkante entweder im Bereich der Stirnseite des im wesentlichen rotationssymmetrischen Werkzeuges angeordnet ist, beispielsweise bei einem Stirnfräser, oder seitlich zum Werkzeugträger angeordnet ist, beispielsweise bei einer üblichen Reibahle oder einem Radialfräser. Die Schneidkanten können parallel zur Rotationsachse des Werkzeuges angeordnet sein, es ist auch möglich, die Schneidkanten relativ zu dieser parallelen Richtung zu verkippen. Fräswerkzeuge und Reibahlen weisen üblicherweise mehrere Schneidplatten auf, wobei durch die Erfindung eine einfache Justage möglich wird, da die Schneidplatten im Längsschlitz zunächst verschiebbar gelagert sind, bis der Werkzeugkopf durch die Spannschraube in den unteren Werkzeugträger eingezogen wird.

Der Schaft ist bevorzugt als Kegelstumpf ausgebildet, wobei die Kopfaufnahme im unteren Werkzeugträger ebenfalls eine kegelförmige oder konische Ausnehmung sein kann oder auch eine zylindrische Innenform aufweisen kann. Im letztgenannten Fall wird jedoch statt einer günstigen Flächenpressung zwischen dem Werkzeugkopf und dem unteren Werkzeugträger eine Linienberührung auftreten, so dass die Gefahr von Beschädigungen infolge der hohen lokalen Belastung entsteht. Aus diesem Grunde ist es bevorzugt, sowohl den Schaft als auch die Kopfaufnahme mit einer kegelförmigen bzw. konusförmigen Kontur auszubilden, so dass eine Flächenpressung auftritt.

Die Spannschraube kann konzentrisch zur Rotationsachse des Werkzeuges angeordnet sein, wobei sowohl ein Einschrauben von der Seite des Werkzeugkopfes als auch von der gegenüberliegenden Stirnseite des Werkzeuges möglich ist. Der letzte Fall wird jedoch meist bevorzugt sein, da hierdurch die Gestaltungsfreiheit des werkzeugkopfes im vorderen Bereich nicht eingeschränkt wird.

Bei einer bevorzugten Ausgestaltung kann der untere Werkzeugträger als Hohlzylinder ausgebildet sein, wobei der innere Hohlraum die Spannschraube aufzunehmen vermag und derart ausgestaltet ist, dass die Spannschraube verschiebefest und drehbar in diesem inneren Hohlraum gelagert ist. Hierzu kann beispielsweise die Spannschraube eine übliche Innensechskantschraube mit verdeckten Kopfbereich sein und der innere Hohlraum im Bereich des verdickten Kopfes einen sich sprungartig vergrößernden lichten Innendurchmesser aufweisen. Hierdurch entsteht ein Absatz, auf dem der Schraubenkopf gelagert ist, so dass die Schraube mit ihrem Gewindebereich durch den Hohlraum hindurchgeschoben werden kann, bis der Schraubenkopf auf dem Absatz aufliegt. Bei geeigneter Länge kann der vordere Gewindeteil der Spannschraube in ein in dem Werkzeugkopf angeordnetes Gewinde eingeschraubt werden, wobei hierdurch der Werkzeugkopf in die Kopfaufnahme gezogen wird.

Die Lagerung und Länge der Spannschraube sollte so gewählt werden, dass von der rückwärtigen Stirnseite des Werkzeuges die Spannschraube leicht und einfach erreichbar ist. So kann beispielsweise im Falle einer Innensechskantschraube die Spannschraube so lang ausgebildet sein, dass mit einem üblichen Sechskantschlüssel die Schraube verdreht werden kann. Solange die Spannschraube nicht in den Werkzeugkopf eingeschraubt ist, könnte diese aus dem inneren Hohlraum des unteren Werkzeugträgers herausfallen. Bevorzugt wird dies jedoch verhindert, was beispielsweise durch einen Stöpsel geschehen kann, der den inneren Hohlraum des unteren Werkzeugträgers verschließt.

Bei einer bevorzugten Ausgestaltung ist der innere Hohlraum im unteren Bereich mit einem Innengewinde versehen, so dass der Stöpsel als Gewindestopfen ausgebildet und in den unteren Bereich des inneren Hohlraumes eingeschraubt sein kann. Besonders bevorzugt ist es, wenn dieser Gewindestopfen von einem offenen Ring gebildet ist, der lediglich den äußeren Rand des Schraubenkopfes abstützt, so dass durch den ringförmigen Gewindestopfen ein Sechskantschlüssel zum Verdrehen der Spannschraube eingeführt und so die Spannschraube auch bei aufgesetztem Gewindestopfen verdreht werden kann. Hierdurch ist die Spannschraube auch bei abgenommenem Werkzeugkopf in dem unteren Werkzeugträger gegen Herausfallen gesichert, wobei ohne zusätzliche Maßnahmen die Spannschraube über das einzuführende Werkzeug verdreht werden kann.

Der ringförmige Gewindestopfen kann mit einer in die untere Stirnfläche eingebrachten Nut versehen sein, so dass er, beispielsweise mit einem Schraubenzieher, aus dem Innengewinde herausgeschraubt werden kann. Anstelle der Nut kann auch eine innere Ausformung des ringförmigen Gewindestopfens mit sechseckigem Querschnitt vorgesehen sein, so dass de Gewindestopfen mit einem Sechskantschlüssel herausgeschraubt werden kann, der dann größer ist, als der zum Verstellen der Spannschraube notwendige Sechskantschlüssel, so dass dieser durch den Gewindestopfen in den unteren Trägerkörper des Werkzeugträgers eingesteckt werden kann. Anstelle des Gewindestopfens können natürlich auch abnehmbare Bauteile, beispielsweise eine einfache Kunststoffkappe vorgesehen sein, wobei diese dann im Falle eines Maschinenwerkzeuges an die Aufnahme des Werkzeuges im Spannfutter der Maschine angepasst sein muss.

Der Werkzeugträger weist, wie auch im vorderen Bereich der unteren Trägerkörper, Spankanäle auf, die einerseits zum Abführen der durch das Werkzeug abgetragenen Partikel und Späne des Werkstückes dienen, andererseits die Zufuhr von Kühlflüssigkeit ermöglichen können. Während im Falle eines Fräskopfes die Abfuhr der Späne eine größere Rolle spielt und somit die Spankanäle entsprechend geformt und dimensioniert sein sollten, kann im Falle einer Reibahle, bei der eine Innenbohrung des Werkstückes lediglich fein bearbeitet wird und durch deren Bearbeitung nur verhältnismäßig wenig und kleine Späne anfallen, der Spankanal einfacher und kleiner ausgestaltet sein.

Bei einer bevorzugten Ausgestaltung einer Reibahle ist beispielsweise der Spankanal geradlinig und parallel zur Rotationsachse des Werkzeuges ausgebildet. Neben den Schlitzen zur Aufnahme der Schneidplatte sind bei dieser Ausgestaltung auf der einen Seite ein Spankanal und auf der gegenüberliegenden Seite ein hervorspringender Bereich angeordnet, der die Schneidplatte auf der der Schneidkante abgewandten Seite abstützt. Diese Abstützung fixiert die Schneidplatte und verhindert einen springenden Werkstückeingriff. Die Spankanäle erstrecken sich von dem Werkzeugkopf bis in den unteren Trägerkörper, wobei der untere Trägerkörper bevorzugt eine zylindrische Außenform aufweist, die im mittleren Bereich, also dem Bereich, der oberhalb der Bearbeitungszone noch in das Sackloch oder den herzustellenden Schlitz eintaucht, im Durchmesser etwas reduziert ist.

Aus fertigungstechnischen Gründen wird der untere Trägerkörper bevorzugt aus einem Stangenmaterial hergestellt, wobei der im Durchmesser reduzierte mittlere Bereich durch Abdrehen einer gewünschten Schichtdicke hergestellt ist. Die Spankanäle im oberen Bereich können dann durch Räumen längs der Stangenlängsachse aus dem durch das Abdrehen des mittleren Teiles entstandenen rechtwinklig zur Stangenachse hervorspringenden oberen Material hergestellt werden.

Auf gleiche Weise kann auch der auf den unteren Trägerkörper aufzusteckende Werkzeugkopf hergestellt werden, wobei hier der Schaft des Werkzeugkopfes auf einen der Bohrung der Kopfaufnahme entsprechenden Durchmesser abzudrehen ist und gleichzeitig die gewünschte Konizität des Schaftes herzustellen ist. Anschließend können auch hier in den nicht abgedrehten vorderen Teil die Spankanäle zusammen mit den Schlitzen eingebracht werden, wobei sich die Schlitze zu beiden Seiten des Werkzeugkopfes bis kurz vor die Stirnseiten erstrecken werden. Auf diese Weise entsteht zusammen mit der Innenbohrung im zylindrischen Grundkörper des Werkzeugkopfes eine käfigartige Ausgestaltung, die es ermöglicht, infolge des radialen Druckes auf diesen Körper die in die Längsschlitze eingelegten Schneidplatten festzuklemmen. Im vorderen Bereich kann der Werkzeugkopf ein weiteres Aufnahmegewinde aufweisen, das beispielsweise durch Abdrehen des vorderen Teiles des zylindrischen Grundkörpers hergestellt sein kann. Auf dieses vordere Gewinde kann eine Abdeckkappe aufgeschraubt sein.

Oft wird es ausreichen, die Schneidplatten in die als Aufnahme dienenden Längsschlitze einzulegen, dort auszurichten und anschließend über die Zugkraft beim Einlegen des Werkzeugkopfes in den unteren Trägerkörper einzuspannen. Zur zusätzlichen Sicherung kann die Schneidplatte im vorderen Bereich mit einer vorderen Haltenase oder im hinteren Bereich mit einer hinteren Haltenase versehen sein, die Teile des Werkzeugkopfes oder des unteren Trägerkörpers bei Zusammenbau des Werkzeuges untergreifen, so dass in radialer Richtung eine zusätzliche formschlüssige Verbindung geschaffen ist. Dies verhindert ein Herausfallen der Schneidplatte aus der Aufnahme, sofern die Spannkraft nicht ausreicht, die Schneidplatte zu halten.

Während der Bearbeitung ist eine derartige zusätzliche Verbindung jedoch nicht erforderlich, da hier aufgrund der Kontaktkraft zwischen Schneidplatte und Werkstück ein radiales Herausfallen der Schneidplatte ohnehin nicht möglich ist, hier muss die Schneidplatte lediglich gegen axiales Auswandern gesichert sein. Da wesentliche Axialkräfte während der Bearbeitung jedoch nicht auftreten, wird hier meist die Klemmkraft der Aufnahme ausreichen, zusätzlich kann die Abdeckkappe und der untere Trägerkörper jedoch einen Kragen bilden, auf den sich die Schneidplatte in beide Richtungen abstützen kann.

Durch die Möglichkeit, die Schneidplatten auf einfache Weise einzubauen, kann nun mit einem Trägerkörper eines Werkzeuges schnell und leicht zwischen verschiedenen Schneidplatten aus verschiedenen Materialien gewechselt werden. Besondere Befestigungsvorkehrungen, wie beispielsweise Durchgangslöcher zur Aufnahme einer Befestigungsschraube sind nicht mehr notwendig.

Insbesondere im Falle einer Reibahle wird bevorzugt, die Schneidplatten möglichst fein einstellen zu können, ohne hierzu aufwendige Lehren oder Messverfahren zu benötigen. Hierzu kann der Trägerkörper als Hohlkörper ausgebildet sein und im Inneren ein Spreizmittel aufweisen. Die Schneidplatten sind bei dieser Ausgestaltung in einen durchgängigen Längsschlitz eingesetzt, so dass sie durch den Schlitz in den inneren Hohlraum des Werkzeugkopfes hineinragen und in Kontakt mit dem Spreizmittel stehen.

Die Schneidplatten können so durch die Spreizfunktion des Spreizmittels aus dem Werkzeugkopf herausgedrückt werden und, sofern die Spreizfunktion von außen einstellbar ist, über diese Einstellbarkeit justiert werden. Zusätzlich kann die Schneidplatte durch eine Federkraft, beispielsweise durch einen um die untere oder obere Haltenase und den Grundkörper des Werkzeugkopfes herumgelegten federnden Spannring an das Spreizmittel angestellt werden, so dass ein radiales Auswandern der Schneidplatten vor dem Einspannen vermieden ist.

Bei einer bevorzugten Ausgestaltung weist beispielsweise der Trägerkopf ein kegelstumpfartiges Spreizmittel auf, das in den hohlzylindrischen Grundkörper des Werkzeugkopfes eingesetzt ist und im unteren, dem unteren Trägerkörper zugewandten Bereich in ein Innengewinde in diesen zylindrischen Grundkörper eingeschraubt ist. Durch Verdrehen dieses konischen Spreizmittels wird dieses längs der Rotationsachse des Werkzeugkopfes verlagert, so dass aufgrund der Steigung seiner äußeren Mantelfläche die an dieser äußeren Mantelfläche anliegende Schneidplatte in radialer Richtung zum Werkzeugkopf herausgedrückt wird. Die untere Kante der Schneidplatte sollte der konischen Form der äußeren Mantelfläche des Spreizmittels angepasst sein, so dass aufgrund des Herausdrückens der Schneidplatte aus dem Längsschlitz selbsttätig eine Parallelität der Schneidkante zur Rotationsachse des Werkzeuges und damit eine hohe Zylinderität des Werkzeuges eingestellt wird.

Bei dieser Ausgestaltung kann im unteren Bereich des Werkzeugkopfes, also im Bereich der Stirnseite des in die Kopfaufnahme des unteren Trägerkörpers einzusetzenden Schaftes, ein gemeinsames Innengewinde angeordnet sein, in das einerseits der Spreizkörper von oben und andererseits die Spannschraube von unten einschraubbar ist. Durch eine geeignete Länge des Innengewindes kann eine Berührung beider Schraubenenden vermieden und ein einfacher Aufbau des Werkzeugkopfes ermöglicht werden. Bei dieser Ausgestaltung besteht der Werkzeugkopf lediglich aus einem rotationssymmetrischen Bauteil, das als Drehteil herstellbar ist, wobei nach dem Herstellen der rotationssymmetrischen Grundform die Spankanäle und die Längsschlitze durch Räumen oder andere geeignete Fertigungsmaßnahmen einzubringen sind.

Bei einer anderen, etwas aufwendiger zu montierenden Ausgestaltung des Werkzeugkopfes kann das Spreizmittel ebenfallskonisch ausgebildet sein und über Nuten verfügen, in die der innere Rand der Werkzeugplatte nach der Art einer Nut-Feder-Verbindung einsetzbar ist. Diese Ausgestaltung weist eine radiale Lagerung bei axialer Verschiebbarkeit der Schneidplatte relativ zur Rotationsachse des Werkzeuges auf. Auf diese Weise wird ein zusätzlicher Spannring zum Anstellen der Schneidplatte an den Spreizkörper entbehrlich, ohne dass die Gefahr besteht, dass die Schneidplatte in radialer Richtung aus dem Werkzeugkopf herausrutscht. Zur Montage dieser Ausgestaltung werden zunächst die Schneidplatten in die schlitzförmigen Aufnahmen eingesteckt, bis ihr unterer, als Feder ausgebildeter Rand in den inneren Hohlraum des Werkzeugkopfes hineinragt, anschließend wird von der oberen Stirnseite des Spreizmittel in die Innenbohrung des Werkzeugkopfes eingedrückt, wobei die unteren Ränder der Schneidplatte dann in die Nuten des Spreizmittels eingreifen.

Der vordere Bereich der Nuten kann als sich langsam verengender Auffangbereich ausgebildet sein, so dass das Einführen des Spreizkörpers in die Innenbohrung erleichtert ist. Diese Ausgestaltung ist insbesondere bei größeren Werkzeugen, beispielsweise im Falle eines Radialfräsers mit mehreren über den Umfang verteilten Schneidplatten bevorzugt.

Die beiden oben genannten Ausgestaltungen weisen einen Spreizkörper auf, der durch Einschrauben in ein Innengewinde im unteren Teil des Werkzeugkopfes einstellbar und justierbar ist. Bevorzugt kann auf die obere Stirnseite des Werkzeugkopfes auf ein hervorspringendes Gewinde eine Abdeckkappe aufgeschraubt werden, die eine mittig angeordnete Bohrung aufweist, durch eine ein Justierwerkzeug, beispielsweise ein Sechskantschlüssel, in die Innenbohrung des Werkzeugkopfes einführbar ist. Diese Abdeckkappe kann eine äußere Skala oder eine sonstiges optisches Erkennungsmittel aufweisen, das in Verbindung mit einer Markierung auf dem Einstellschlüssel die Justage des Spreizmittels erleichtert.

Der Einrichter eines derartigen Werkzeuges kann zum Beispiel nach Messung des Außendurchmessers der durch die Schneidkanten beschriebenen Kreisbahn durch Weiterdrehen des Einstellwerkzeuges um einen bestimmten Winkel im Vorfeld wissen, um welchen Betrag die Übersetzung des Spreizmittels hier durch den Außendurchmesser des von den Schneidkanten beschriebenen Kreises erhöht.

So kann bei einer beispielhaften Ausgestaltung die durch die Steigung der kegelförmigen Mantelfläche des Spreizkörpers bestimmte Übersetzung der Justiereinrichtung so gewählt sein, dass eine Umdrehung eines Einstellschlüssels eine Vergrößerung des Durchmessers des von den Schneidkanten beschriebenen Kreises bzw. Zylinders um 0,05 mm bewirkt. Ein besonderer Vorteil der erfindungsgemäßen Einstellbarkeit liegt darin, dass die Einstellmanipulation auf alle Schneidplatten gleichzeitig und synchron wirkt, so dass ein aufwendiges Abstimmen der Einzeljustagen der Schneidplatten untereinander entfällt.

Der Werkzeugkopf kann zusätzlich ein Fixiermittel für das Spreizmittel aufweisen, damit die Einstellung der Schneidplatten festgelegt werden kann. Ein solches Fixiermittel kann zum Beispiel von einer Madenschraube gebildet sein, die den vorderen Bereich des Werkzeugkopfes durchdringt und durch die Einschraubbewegung gegen das Spreizmittel angestellt werden kann.

Eine weitere bevorzugte Ausgestaltung des Werkzeuges kann als Stirnwerkzeug, beispielsweise als Stirnfräser ausgebildet sein. Bei diesem Werkzeug sind die Schneidkanten an der Stirnseite des Werkzeugkopfes rechtwinklig oder auch, etwa bei Einsatz als Senkwerkzeug in einem beliebigen Winkel zur Rotationsachse des Werkzeuges angeordnet. Hierzu weisen die Schneidplatten entweder zusätzlich zu den oben beschriebenen längs der Rotationsrichtung verlaufenden Schneidkanten oder anstelle dieser Längskanten im vorderen Bereich Schneidkanten auf, die entweder in einer Ebene oder auf einer gemeinsamen virtuellen Kegeloberfläche liegen.

Bei dieser Ausgestaltung werden die Schneidplatten bevorzugt in axialer Richtung des Werkzeuges fixiert und zentriert, so dass alle Schneidkanten ohne aufwendige Nachjustage gemeinsam an der Werkstückoberfläche angreifen können. Hierzu kann das Werkzeug für jede Schneidplatte eine Ausnehmung und eine in diese Ausnehmung eingreifende Zentriernase aufweisen, wobei die Ausnehmung entweder an dem Werkzeugkopf oder an der Scheidplatte angeordnet sein kann. Sie kann in Form eines V ausgebildet sein, in das die korrespondierend ausgebildete Zentriernase eingreift, so dass bei Einsetzen der Schneidplatten selbsttätig eine Lagebestimmung erfolgt. Dies hat zusätzlich den Vorteil, dass auch bei erhöhtem Anpressdruck in axialer Richtung ein Nachgeben und Verschieben der Schneidplatten durch das entstandene Widerlager ausgeschlossen ist.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: eine schaubildliche Ansicht einer ersten Ausführungsform eines erfindungsgemäßen Werkzeuges als Explosionsansicht,
- Fig. 2: den unteren Werkzeugträger aus Fig. 1 in einer Seitenansicht im Schnitt,
- Fig. 3: den Werkzeugkopf des in Fig. 1 dargestellten Werkzeuges in einer Seitenansicht im Schnitt,
- Fig. 4: das zusammengesetzte Ausführungsbeispiel des Werkzeuges gemäß Fig.1 ohne die Abdeckkappe,
- Fig. 5: eine weitere Ausgestaltung eines erfindungsgemäßen Werkzeuges als Explosionsansicht, und in
- Fig. 6: eine Schnittansicht des in Figur 5 dargestellten Werkzeuges.

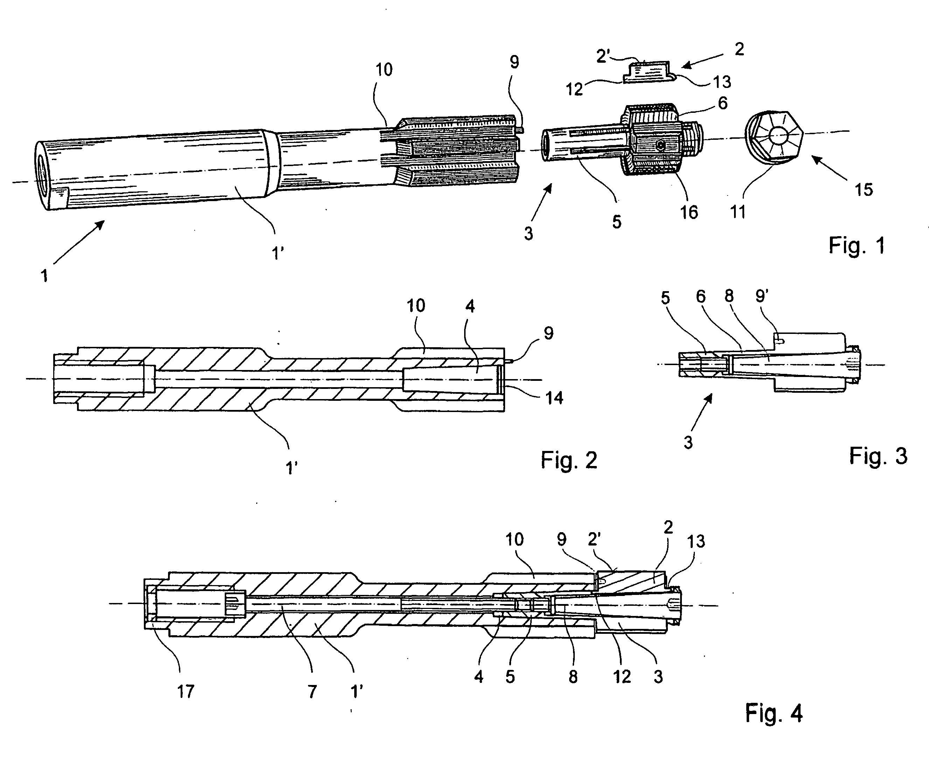

In Fig. 1 ist ein erfindungsgemäßes Werkzeug 1 dargestellt, das als Maschinenreibahle zur Aufnahme in einem Spannfutter einer industriellen Reibmaschine ausgebildet ist. Das Werkzeug 1 wird im wesentlichen von einem unteren Trägerkörper 1' und einem auf die vordere Stirnseite des Trägerkörpers 1' aufgesetzten Werkzeugkopf 3 gebildet. Auf diesen Werkzeugkopf 3 kann im vorderen Bereich eine Abdeckkappe 15 aufgeschraubt werden, in schlitzförmige Aufnahmen 6 können Schneidplatten 2 eingesetzt werden.

Die Schneidplatten 2 weisen eine radial nach außen gerichtete Schneidkante 2' auf, die parallel zur Rotationsachse des Werkzeuges 1 angeordnet gegen die innere Mantelfläche einer Bohrung eines Werkstückes angestellt werden können. Derartige Maschinenreibahlen werden zur Feinbearbeitung von Bohrungen verwendet und müssen auf einen genauen Außendurchmesser der von den Schneidkanten 2' beschriebenen Kreisbahn einstellbar sein. Hierzu weist der Werkzeugkopf eine Einstellbarkeit der radialen Position der Schneidplatten 2 auf, die dem Einrichter der Reibmaschine ermöglicht, den Bearbeitungsdurchmesser des Werkzeuges auf das gewünschte Maß einzustellen und einen verschleiß der Schneidkanten 2' nachzujustieren. Der Werkzeugkopf 3 weist neben der Aufnahmemöglichkeit ein Fixiermittel 15 in Form einer seitlich in den vorderen Kopfbereich eingeschraubten Klemmschraube auf, die nach Justieren der radialen Position der Schneidplatten 2 das Justiermittel zu blockieren vermag und so die vorgenommene Einstellung fixiert.

In den Fig. 2 bis 4 ist das Werkzeug 1 aus Fig. 1 in einer Seitenansicht im Schnitt dargestellt. Fig. 2 zeigt dabei den unteren Trägerkörper 1' des Werkzeugträgers, der im wesentlichen von einem hohlzylindrischen Grundkörper gebildet ist.

Ein bevorzugtes Material für einen derartigen Grundkörper ist beispielsweise, 16MnCr5, wobei auch andere Werkzeugstähle einsetzbar sind. Der untere Trägerkörper 1' weist im vorderen Bereich eine Kopfaufnahme 4 auf, in die der Werkzeugkopf 3 einsteckbar ist.

Die Kopfaufnahme 4 ist konisch mit einem sich nach außen erweiternden lichten Querschnitt ausgebildet und weist im vorderen Bereich einen in einer Nut gelagerten Spannring 14 auf, der bei eingesetztem Werkzeugkopf 3 untere Haltenasen 12 der Schneidplatte 2 umschließt und diese radial nach innen gerichtet in die schlitzförmige Aufnahme 6 des Werkzeugkopfes 3 drückt. Hierdurch ist sichergestellt, dass die Schneidplatten 2 innerhalb des Werkzeugkopfes 3 nicht nach außen auswandern, sondern eine definierte Position einnehmen.

Im äußeren Bereich weist der untere Trägerkörper 1' längs zur Rotationsachse verlaufende Spankeile 10 auf, durch die zum einen das abgetragene Material aus der Bohrung gefördert werden kann und zum anderen Kühlwasser zur Bearbeitungsstelle geleitet werden kann. Im mittleren Bereich verjüngt sich der Trägerkörper 1', wodurch die Freigängigkeit des Werkzeuges 1 und damit der Spanaustrieb erleichtert werden. Im hinteren Bereich weist der Trägerkörper 1' eine sich sprungartig radial nach außen vergrößernde Bohrung auf, die als Lagerabsatz für die in Fig. 2 nicht dargestellte Spannschraube 7 dient. Oberhalb des Lagerabsatzes ist ein Innengewinde eingearbeitet, in das ein (hier nicht dargestellter) Gewindestopfen eingeschraubt werden kann, der ein Herausfallen der Spannschraube im nicht montierten Zustand verhindert.

Ein Zentriermittel 9 springt axial nach vorne in Richtung des einzusetzenden Werkzeugkopfes 3 hervor und kann in eine als Zentriermittelaufnahme 9' dienende Aufnahmebohrung des Werkzeugkopfes 3 eingesetzt werden, so dass die Position des Werkzeugkopfes 3 relativ zum unteren Trägerkörper 1' fixiert ist und sichergestellt ist, dass die Bereiche der Spankanäle 10 des unteren Trägerkörpers 1' mit denjenigen des werkzeugkopfes 3 fluchten.

In Fig. 3 ist der Werkzeugkopf 3 in einer Einzelteilzeichnung dargestellt. Der Werkzeugkopf 3 weist Aufnahmen 6 für mehrere (hier nicht dargestellte) Schneidplatten 2 auf, wobei diese in die schlitzförmige Aufnahme 6 eingeschoben werden. Zusammen mit einer durchgängigen Innenbohrung ergibt sich durch die radial über den Umfang verteilten Aufnahmen 6 eine käfigartige Ausgestaltung des Grundkörpers des Werkzeugkopfes 3, so dass bei Einsetzen des werkzeugkopfes 3 in die Aufnahme 4 der auf den Schaft 5 des Werkzeugkopfes 3 übertragene radiale Druck ein Zusammenpressen der Bereiche außerhalb des Schlitzes 6 verursacht, wodurch wiederum die eingelegten Schneidplatten 2 eingeklemmt werden.

Zur radialen Justierung des durch die Schneidkanten 2' beschriebenen Zylinders ist ein Spreizmittel 8 vorgesehen, das im wesentlichen in Form einer Innensechskantschraube ausgebildet ist, die in den der Aufnahme 4 zugewandten Bereich des hohlzylindrischen Grundkörpers des Werkzeugkopfes 3 eingeschraubt ist. Außerhalb des Gewindes weist das Spreizmittel 8 eine sich in Richtung des Schraubenkopfes erweiternde konische Mantelfläche auf, wobei durch die axiale Positionsverlagerung des Spreizmittels 8 bei Einschrauben in das Innengewinde die an der konischen Mantelfläche anliegenden inneren Ränder der Schneidplatte 2 radial herausgedrückt werden und so der Außendurchmesser des durch die Schneidkanten 2' beschriebenen Kreises bzw. Zylinders erweiterbar ist.

Der untere Rand der Schneidplatten 2 ist so ausgebildet, dass er bei zur Rotationsachse des Werkzeuges 1 paralleler Schneidkante 2' vollständig an der konischen Mantelfläche des Spreizmittels 8 anliegt. Hierdurch ist sichergestellt, dass die Schneidkanten 2' zueinander jeweils parallel ausgerichtet sind und eine passgenaue Bearbeitung der Innenbohrung durch die Reibahle möglich ist.

Im vorderen Bereich ist das Spreizmittel 8 mit einer Innensechskantausnehmung versehen, so dass ein Sechskantschlüssel zum Einstellen des Spreizmittels 8 verwendet werden kann. Der vordere Bereich des Werkzeugkopfes 3 weist einen nach vorne springenden Achsstummel auf, der mit einem Außengewinde versehen ist und darüber hinaus das außerhalb der Aufnahmen 6 gelegene Material des Werkzeugkopfes 3 miteinander verbindet. Auf das Außengewinde des Achsstummels kann die Abdeckkappe 15 aufgeschraubt werden, wobei diese eine mittige Bohrung aufweist, so dass auch bei aufgeschraubter Abdeckkappe 15 der zum Verstellen des Spreizmittels 8 notwendige Sechskantschlüssel in die innere Bohrung des Werkzeugkopfes 3 einführbar ist.

Wie aus Fig. 1 ersichtlich ist, weist zum Einstellen des Bearbeitungsdurchmessers der Reibahle die Abdeckkappe 15 eine Einstellanzeige 11 auf, die mit einer optischem Markierung des Einstellschlüssels zum Einstellen des Spreizmittels 8 korrespondiert. Durch diese Einstellanzeige 11 kann der Einrichter des Werkzeuges 1 den äußeren Durchmesser des durch die Schneidkanten 2' beschriebenen Kreises bzw. Zylinders um einen definierten Bereich vergrößern bzw. verkleinern.

Im hinteren Bereich weist der Werkzeugkopf 3 eine Innenbohrung auf, in die einerseits das Spreizmittel 8 eingeschraubt ist, andererseits von der gegenüberliegenden Seite die Spannschraube 7 einschraubbar ist. Der in die Kopfaufnahme 4 einsetzbare Schaft 5 des Werkzeugkopfes 3 ist, wie die Aufnahme 4, mit einer konischen Seitenfläche ausgebildet, so dass sich zwischen der Kopfaufnahme 4 und dem Schaft 5 eine Flächenberührung ergibt, die hohe Punktbelastungen zwischen beiden Bauteilen vermeidet.

In Fig. 4 ist das Werkzeug mit Ausnahme der Abdeckkappe 15 in zusammengebautem Zustand dargestellt. Die Spannschraube 7 ist in den hinteren Gewindeteil der Innenbohrung des Werkzeugkopfes 3 eingeschraubt und zieht so den Schaft 5 in die Aufnahme 4 so weit ein, bis der vordere, radial erweiterte Bereich des Werkzeugkopfes 3 an der Stirnseite des unteren Trägerkörpers 1' anliegt. Hierdurch greift das Zentriermittel 9 in eine Zentriermittelaufnahme 9' bei korrekter Ausrichtung des Werkzeugkopfes 3 ein, so dass das Werkzeug nur in einer definierten Position zusammengebaut werden kann.

In eine der Aufnahmen 6 ist eine Schneidplatte 2 eingesetzt, wobei die Haltenasen 12 und 13 der Schneidplatte 2 innerhalb des Schlitzes nach vorne bzw. hinten hervorspringen. Dies bewirkt einerseits, dass die untere Haltenase 12 in der Aufnahme 4 angeordnet ist und die obere Haltenase 13 die auf den hervorspringenden Gewindestummel aufgeschraubte Abdeckkappe untergreift. Hierdurch ist ein axiales Auswandern der Schneidplatte 2 verhindert, zusätzlich drückt der Spannring 15 die Schneidplatte 2 gegen das Spreizmittel 8, so dass die Lage der Schneidplatte 2 eindeutig festgelegt und durch die Tiefe des Einschraubens des Spreizmittels 8 in den Werkzeugkopf 3 bestimmt ist.

In den unteren Werkzeugträger 1' ist zum einen die Spannschraube 7 eingeschraubt, die den Werkzeugkopf 3 in die Aufnahme 4 einzieht. Die Spannschraube 7 stützt sich dabei mit ihrem Schraubenkopf auf einen Absatz innerhalb der Innenbohrung des unteren Werkzeugträgers 1' ab, wobei die Spannschraube 7 eine handelsübliche Innensechskantschraube oder auch eine andere Schraube sein kann. Der verschiebebereich des Schraubenkopfes ist mit einem Innengewinde versehen, in das zum Abdecken und Sichern der Spannschraube 7 bei abgeschraubtem Werkzeugkopf 3 ein Gewindestopfen 17 eingeschraubt ist, der von einem mit einer mittigen Öffnung versehenen Ring gebildet ist. Dies verhindert einerseits ein axiales Herausfallen der Spannschraube 7 aus dem unteren Werkzeugträger 1βt andererseits die Innenbohrung nur so weit, dass ein Einstell- bzw. Spannwerkzeug einführbar bleibt ohne den Gewindestopfen entnehmen zu müssen.

Bei Einsatzzwecken, in denen eine Verunreinigung der inneren Gewindebohrung verhindert werden soll, kann der Gewindestopfen auch geschlossen ausgebildet sein bzw. in den offenen Gewindestopfen, so wie er in Fig. 4 dargestellt ist, eine zusätzliche Abdeckkappe eingelegt sein. Zum Herausschrauben aus der Gewindebohrung weist der Gewindestopfen 17 einen hier nicht dargestellten Schlitz auf, so dass ein üblicher Schraubenzieher angesetzt werden kann ist, über den ein Herausschrauben des Gewindestopfens 17 aus der Bohrung ermöglicht wird. Anstelle des Schlitzes kann die mittige Ausnehmung im Gewindestopfen 17 auch sechseckig ausgebildet sein, so dass der Gewindestopfen 17 über einen Sechskantschlüssel fassbar ist. Dieser ist dann etwas größer zu wählen als der zum Anziehen der Spannschraube 7 notwendige, damit bei eingesetztem Gewindestopfen 17 der Schlüssel zum Anziehen der Spannschraube 7 durchführbar bleibt.

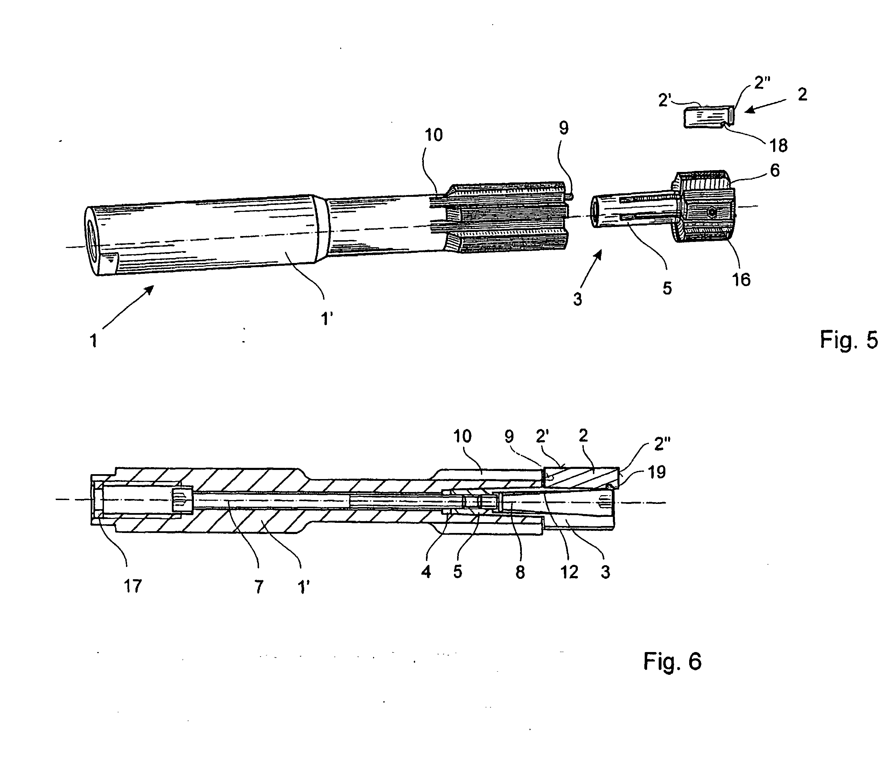

In Figur 5 ist eine Explosionsansicht einer zweiten Ausgestaltung der Erfindung dargestellt. Diese Ausgestaltung unterscheidet sich von der zuvor beschriebenen dadurch, dass sie zusätzlich als Stirnfräser eingesetzt werden kann. Hierzu wird auf eine vordere Abdeckung des Werkzeugkopfes 3 verzichtet und die Schneidplatten 2 sind über die vordere Stirnseite des Werkzeugkopfes 3 hinaus verlängert. An der vorne hervorspringenden Kante weisen sie eine zweite Schneidkante 2'' auf, die im gezeigten Ausführungsbeispiel rechtwinklig zur Rotationsachse des Werkzeuges angeordnet ist.

Dieses Werkzeug kann als Umfangsfräser mit zur Längsrichtung des Werkzeuges rechtwinkliger Vorschubrichtung oder auch als Stirnfräser mit einem Vorschub in Richtung parallel zur Rotationsachse genutzt werden. Die übrigen funktionalen Bauelemente, insbesondere der Werkzeugträger 1, unterscheiden sich bei dieser Ausgestaltung nicht von der oben beschriebenen ersten Ausführungsform. Anstelle einer rechtwinklig zur Rotationsachse des Werkzeuges angeordneten Schneidkante kann auch ein anderer Winkel vorgesehen sein, so daß die von den rotierenden Schneidkanten 2" beschriebene Fläche die Mantelfläche eines Kegels ist. Ein solches Werkzeug kann zum Beispiels als Senkbohrer eingesetzt werden, wobei durch die Kombination mit den zur Rotationsachse rechtwinkligen Schneidkanten 2' ein Kombinationswerkzeug mit einem Senkbohrer und einer Reibahle entsteht.

Die Schneidplatten 2 weisen hier eine Ausnehmung 18 auf, die bei Einsetzen der Schneidplatten 2 in die Aufnahme 6 des Werkzeugkopfes 3 in korrespondierende Zentriernasen 19 eingreifen. Durch diese formschlüssige Paarung ist die axiale Position der Schneidplatten 2 festgelegt und ein ungleichmäßiges Anstellen der Schneidplatten 2 an die Werkstückoberfläche kann vermieden werden. Im hinteren Bereich wurde bei den dargestellten Schneidplatten auf untere Haltenasen verzichtet, da die Klemmkraft der Aufnahmen bei Einsetzen in die Kopfaufnahme ausreichend groß ist, im die Schneidplatte sicher zu halten, zumal in radialer, nach außen gerichteter Richtung ohnehin keine großen Kräfte auftreten.

## Patentansprüche

1. Werkzeug, insbesondere zur reibenden oder spanabhebenden Bearbeitung, mit mehreren gegen ein Werkstück anstellbaren Schneidplatten (2), die an einem Werkzeugträger (1) befestigt sind und jeweils eine durch eine rotierende Bewegung des Werkzeuges entlang einer Werkstückoberfläche bewegte Schneidkante (2') aufweisen, wobei die Schneidplatten (2) in eine Aufnahme (6) des Werkzeugträgers eingesetzt sind, die Aufnahme von einem die Schneidplatten aufnehmenden Längsschlitz gebildet ist und Spannmittel vorgesehen sind, die die Schneidplatten in den Aufnahmen festspannen, **dadurch gekennzeichnet, daß** ein gemeinsames Spannmittel (7) für mehrere oder alle Schneidplatten (2) vorgesehen ist, welches einen rechtwinklig zur Schneidplatte (2) wirkenden Druck auf die Aufnahme (6) ausübt, wobei infolge des Druckes die Längsschlitze zusammengedrückt und so die Schneidplatten (2) eingespannt sind.

2. Werkzeug nach Anspruch 1, **dadurch gekennzeichnet, daß** der Werkzeugträger (1) einen unteren Trägerkörper (1') und einen als Hohlkörper ausgebildeten Werkzeugkopf (3) aufweist, der mit einem als Schaft (5) ausgebildeten Ende in eine Kopfaufnahme (4) des Werkzeugträgers (1) eingesetzt ist, und die Aufnahme (6) von einem in dem Werkzeugkopf (3) angeordneten, durchgängigen und sich bis in die Kopfaufnahme (4) erstreckenden Längsschlitz gebildet ist.

3. Werkzeug nach Anspruch 2, **dadurch gekennzeichnet, daß** das Spannmittel von einer Spannschraube (7) und der Kopfaufnahme (4) gebildet ist, wobei der untere Trägerkörper (1') über die Spannschraube (7) mit dem Werkzeugkopf (3) verbunden ist, die den Schaft (5) in die Kopfaufnahme (4) zu drücken und so einen radialen Druck der Kopfaufnahme (4) auf den Schaft (5) aufzubringen vermag, durch den der Längsschlitz zusammengedrückt und die darin positionierte Schneidplatte (2) eingespannt ist.

4. Werkzeug nach einem oder mehreren der vorhergehenden Ansprüche, **dadurch gekennzeichnet, daß** es parallel zur Rotationsachse des Werkzeuges angeordnete Schneidkanten (2') aufweist.

5. Werkzeug nach einem oder mehreren der vorhergehenden Ansprüche, **dadurch gekennzeichnet, daß** es an seiner Stirnseite zumindest eine rechtwinklig oder in einem Winkel zwischen 0° und 90° zur Rotationsachse des Werkzeuges angeordnete Schneidkante (2'') aufweist.

6. Werkzeug nach einem oder mehreren der vorhergehenden Ansprüche, **dadurch gekennzeichnet, daß** es mehrere äquidistant über den Umfang des Werkzeugkopfes (3) verteilte Schneidplatten (2) aufweist.

7. Werkzeug nach Anspruch 3, **dadurch gekennzeichnet, daß** der Schaft (5) in Form eines Kegelstumpfes ausgebildet ist und die Spannschraube (7) konzentrisch zum Schaft angeordnet ist.

8. Werkzeug nach einem oder beiden der Ansprüche 3 und 7, **dadurch gekennzeichnet, daß** die Kopfaufnahme (4) zur Aufnahme des Schaftes (5) als konische Bohrung mit in Richtung der Spannschraube (7) sich verringerndem Innendurchmesser ausgebildet ist.

9. Werkzeug nach einem oder mehreren der Ansprüche 3, 7 und 8, **dadurch gekennzeichnet, daß** der untere Trägerkörper (1') ein im wesentlichen rotationssymmetrischer Hohlzylinder ist, wobei die Spannschraube (7) in dem unteren Trägerkörper (1') drehbar gelagert ist und an einem ihrer Enden einen von der dem Werkzeugkopf (3) abgewandten Seite zugänglichen Werkzeugansatz und an dem gegenüberliegenden Ende ein in eine Gewindebohrung des Werkzeugkopfes (3) einschraubbares Außengewinde aufweist.

10. Werkzeug nach einem oder mehreren der Ansprüche 3 und 7 bis 9, **dadurch gekennzeichnet, daß** die Spannschraube (7) einen Schraubenkopf und der untere Trägerkörper (1') zur Aufnahme und drehbaren Lagerung der Spannschraube (7) eine Innenbohrung aufweist, deren Innendurchmesser in dem Bereich dem Werkzeugkopf abgewandten Bereich sprungartig mit einem zur Bohrung rechtwinkligen Absatz erweitert ist, wobei sich der Schraubenkopf zu seiner drehbaren Lagerung auf dem Absatz abzustützen vermag.

11. Werkzeug nach Anspruch 10, **dadurch gekennzeichnet, daß** der sprungartig erweiterte Bereich der Innenbohrung zumindest im äußeren Bereich mit einem Innengewinde versehen ist, in das zur Sicherung der Spannschraube (7) gegen axiales Herausfallen bei abgeschraubtem Werkzeugkopf (3) ein Gewindestopfen (17) eingeschraubt ist.

12. Werkzeug nach beiden der Ansprüche 2 und 3, **dadurch gekennzeichnet, daß** der Werkzeugkopf (3) im Bereich oberhalb des Schaftes im wesentlichen die Form eines Hohlzylinders aufweist, dessen Durchmesser dem Außendurchmesser des angrenzenden Bereichs des unteren Trägerkörpers (1') entspricht, wobei in die äußere Mantelfläche des Werkzeugkopfes (3) und des unteren Trägerkörpers (1') geradlinige oder gewundene Spankanäle (10) eingearbeitet sind.

13. Werkzeug nach einem der Ansprüche 2, 3 und 12, **dadurch gekennzeichnet, daß** der untere Trägerkörper (1') ein insbesondere stiftartig ausgebildetes Zentriermittel (9) und der Werkzeugkopf (3) eine Aufnahmemöglichkeit für das Zentriermittel (9) in einer definierten Position des Werkzeugkopfes (3) relativ zum unteren Trägerkörper (1') aufweist.

14. Werkzeug nach einem der Ansprüche 2, 3, 12 und 13, **dadurch gekennzeichnet, daß** die Schneidplatte (2) zur formschlüssigen Verbindung mit dem Werkzeugträger (1) eine untere Haltenase (12) aufweist, die den der Schneidkante (2') gegenüberliegenden Rand der Schneidplatte (2) relativ zum Seitenrand der Schneidplatte (2) hervorspringend in Richtung des unteren Trägerkörpers (1') verlängert, wobei bei aufgesetztem Werkzeugkopf (3) der Seitenrand an die Stirnseite des unteren Trägerkörpers (1') angrenzt und die in dem Längsschlitz angeordnete untere Haltenase (12) den unteren Trägerkörper (1') untergreift.

15. Werkzeug nach einem der Ansprüche 2, 3 und 12 bis 14, **dadurch gekennzeichnet, daß** zur Zentrierung der Schneidplatte (2) in zur Rotationsrichtung paralleler Richtung eine Ausnehmung (18) und eine Zentriernase (19) vorgesehen sind, wobei die an der Schneidplatte (2) oder dem Werkzeugkopf (3) angeordnete Zentriernase (19) bei Einlegen der Schneidplatte (2) in die Aufnahme (6) in die Ausnehmung (18) eingreift.

16. Werkzeug nach einem oder mehreren der Ansprüche 2, 3 und 12 bis 15, **dadurch gekennzeichnet, daß** der Werkzeugkopf (3) oberhalb der Schneidkanten (2) eine auf die Stirnseite aufgeschraubte Abdeckkappe (15) aufweist, deren Außendurchmesser geringer ist als der Durchmesser der von der rotierenden Schneidkante (2') beschriebenen Kreisbahn.

17. Werkzeug nach Anspruch 16, **dadurch gekennzeichnet, daß** die Schneidplatte (2) zur formschlüssigen Verbindung mit dem Werkzeugkopf (3) eine obere Haltenase (13) aufweist, die den der Schneidkante (2') gegenüberliegenden Rand der Schneidplatte (2) relativ zum Seitenrand der Schneidplatte (2) hervorspringend in Richtung der Abdeckkappe (15) verlängert und sich der Längsschlitz bis unter die Abdeckkappe (15) erstreckt, wobei die in dem Längsschlitz angeordnete obere Haltenase (13) die Abdeckkappe (15) untergreift.

18. Werkzeug nach Anspruch 17, **dadurch gekennzeichnet, daß** es zumindest eine die untere Haltenase (12) oder die obere Haltenase (13) und den Werkzeugkopf (3) umgreifende, ringförmige Spannfeder (14) aufweist.

19. Werkzeug nach einem oder mehreren der Ansprüche 2, 3 und 12 bis 16, **dadurch gekennzeichnet, daß** in dem Hohlraum des Werkzeugkopfes (3) ein Spreizmittel (8) angeordnet ist, das die in dem Längsschlitz angeordnete Schneidplatte (2) radial nach außen zu drücken vermag.

20. Werkzeug nach Anspruch 19, **dadurch gekennzeichnet, daß** das Spreizmittel (8) von einem Kegelstift mit einer sich zumindest im mittleren Bereich in Richtung des unteren Trägerkörpers (1') verjüngenden, konischen Mantelfläche und einem Gewindezapfen, der an dem unteren Trägerkörper (1') zugewandten Ende in eine Gewindebohrung des Werkzeugkopfes (3) durch Einschrauben spindelähnlich gelagert ist, gebildet wird, wobei der der Stirnseite des Werkzeugkopfes (3) zugewandte Bereich des Kegelstiftes eine Ansatzmöglichkeit für ein Werkzeug, insbesondere eine Sechskantausnehmung oder einen Schlitz aufweist.

21. Werkzeug nach einem oder beiden der Ansprüche 19 und 20, **dadurch gekennzeichnet, daß** das Spreizmittel (8) über eine von der Stirnseite des Werkzeugkopfes (3) zugängliche Justierschraube (16) einstellbar ist.

22. Werkzeug nach Anspruch 21, **dadurch gekennzeichnet, daß** die Schneidplatte (2) in den zylindrisch ausgebildeten Hohlraum des Werkzeugkopfes (3) hineinragt und das Spreizmittel (8) von einem in dem zylindrischen Hohlraum geführten Kegelstumpf gebildet ist, dessen axiale Position innerhalb des Hohlraums über die Justierschraube (16) einstellbar ist.

23. Werkzeug nach Anspruch 22, **dadurch gekennzeichnet, daß** der Kegelstumpf eine Durchgangsbohrung aufweist, durch die die Justierschraube (16) spielbehaftet geführt ist, wobei die Justierschraube (16) auf der der Stirnseite abgewandten Seite des Werkzeugkopfes (3) in eine Gewindebohrung eingeschraubt ist.

24. Werkzeug nach Anspruch 23, **dadurch gekennzeichnet, daß** zwischen dem als Spreizmittel (8) dienenden Kegelstumpf und der Gewindebohrung eine als Rückstellfeder dienende, von der Justierschraube (16) durchdrungene Schraubenfeder angeordnet ist.

25. Werkzeug nach einem oder mehreren der Ansprüche 19, 20 und 21, **dadurch gekennzeichnet, daß** die Lage des Spreizmittels (8) relativ zum Werkzeugkopf (3) durch ein Fixiermittel (16), insbesondere eine in den Werkzeugkopf (3) eingeschraubte Feststellschraube, fixierbar ist.

26. Werkzeug nach einem oder mehreren der Ansprüche 19, 20, 21 und 25, **dadurch gekennzeichnet, daß** es ein Einstellwerkzeug mit einer optischen Markierung aufweist und an der Stirnseite des Werkzeugkopfes eine optische Markierung, insbesondere eine Skalierung angeordnet ist, so daß die Position des Spreizmittels (8) relativ zum Werkzeugkopf (3) ablesbar ist.

27. Werkzeug nach einem oder mehreren der vorhergehenden Ansprüche, **dadurch gekennzeichnet, daß** es eine Reibahle oder ein als Radial- und/oder Stirnwerkzeug einsetzbares Fräs- oder Bohrwerkzeug ist.

## Claims

1. Tool, in particular for abradant or cutting machining, with several cutting plates (2), which can be inclined towards a work piece, fastened to a work piece carrier (1) and having a cutting edge (2') moved by a rotating movement of the tool along the surface of the work piece, the cutting plates (2) being put in a receiver (6) of the work piece carrier, the receiver being formed by a longitudinal slit which holds the cutting plates, and clamping means being provided which clamp the cutting plates in the receivers, **characterised in that** a common clamping means (7) is provided for several or all cutting plates (2) which exercises pressure acting rectangular to the cutting plate (2) on the receiver (6), as a consequence of the pressure the longitudinal slits being compressed and thus the cutting plates (2) being clamped.

2. Tool according to claim 1, **characterised in that** the work piece carrier (1) has a bottom carrier body (1') and a tool head (3) designed as a hollow body, the end of which formed as shank (5) is put in a head receiver (4) of the work piece carrier (1), and the receiver (6) is formed by a continuous longitudinal slot arranged in the tool head (3) and extending to the head receiver (4).

3. Tool according to claim 2, **characterised in that** the clamping means is formed by a clamping screw (7) and the head receiver (4), the bottom carrier body (1') being connected via the clamping screw (7) with the tool head (3), which can press the shank (5) in the head receiver (4) and therefore can exercise radial pressure of the head receiver (4) to the shank (5), by means of which the longitudinal slit is compressed and the cutting plate (2) positioned in it is clamped.

4. Tool according to one or more of the preceding claims, **characterised in that** it has cutting edges (2') arranged parallel to the rotational axis of the tool.

5. Tool according to one or more of the preceding claims, **characterised in that** it has on its front at least one cutting edge (2''), arranged rectangular or at an angle between 0° and 90° to the rotational axis of the tool.

6. Tool according to one or more of the preceding claims, **characterised in that** it has several cutting plates (2) distributed equidistantly over the circumference of the tool head (3).

7. Tool according to claim 3, **characterised in that** the shank (5) has the shape of a truncated cone, and the clamping screw (7) is arranged concentrically to the shank.

8. Tool according to one or both of the claims 3 and 7, **characterised in that** the head receiver (4) for receiving the shank (5) is designed as conical boring with a internal diameter decreasing in the direction of the clamping screw (7).

9. Tool according to one or more of the claims 3, 7 and 8, **characterised in that** the bottom carrier body (1') is a hollow cylinder, which is substantially rotational symmetric, the clamping screw (7) being supported rotatably in the bottom carrier body (1') and having on one of its ends a tool shoulder, which is accessible from the side opposite the tool head (3), and on the opposing end an external thread which can be screwed in a thread boring of the tool head (3).

10. Tool according to one or more of the claims 3 and 7 to 9, **characterised in that** the clamping screw (7) has a screw head and the bottom carrier body (1') has an internal boring for receiving and rotatable support of the clamping screw, the internal diameter of the boring is widened abruptly in the region opposite the tool head with a shoulder rectangular to the boring, the screw head being able to be supported on the shoulder in order to be rotated supported.

11. Tool according to claim 10, **characterised in that** the abruptly widened region of the internal thread has at least on its external region an internal thread, in which a thread plug (17) is screwed in order to prevent the clamping screw (7) from falling out axially when the tool head (3) is screwed off.

12. Tool according to both of the claims 2 and 3, **characterised in that** the tool head (3) has in the region above the shank essentially the shape of a hollow cylinder, the diameter of which corresponds with the external diameter of the adjacent region of the bottom carrier body (1'), straight or winding chip channels (10) being integrated in the external surface of the tool head (3) and the bottom carrier body (1').

13. Tool according to one of the claims 2, 3 and 12, **characterised in that** the bottom carrier body (1') has a centring means (9) designed in particular pin-like, and the tool head (3) has a receiving opportunity for the centring means (9) in a defined position of the tool head (3) relatively to the bottom carrier body (1').

14. Tool according to one of the claims 2, 3, 12 and 13, **characterised in that** the cutting plate (2) has, for a positive connection with the tool carrier (1), a bottom holding catch (12), which elongates the edge of the cutting plate (2) opposing the cutting edge (2') relatively to the side edge of the cutting plate (2) projecting in the direction of the bottom carrier body (1'), the side edge adjoining the front of the bottom carrier body (1') when the tool head (3) is put on, and the bottom holding catch (12) arranged in the longitudinal slit gripping under the bottom carrier body (1').

15. Tool according to one of the claims 2, 3 and 12 to 14, **characterised in that** the centralisation of the cutting plate (2) in a direction parallel to the rotational direction a recess (18) and a centralising shoulder (19) are provided, the centralising shoulder (19) arranged on the cutting plate (2) or the tool head (3) engaging with the recess (18) when the cutting plate (2) is put in the receiver (6).

16. Tool according to one or more of the claims 2, 3 and 12 to 15, **characterised in that** the tool head (3) has above the cutting edges (2) a cover (15) screwed on the front, the diameter of which is smaller than the diameter of the circuit covered by the rotating cutting edge (2').

17. Tool according to claim 16, **characterised in that** the cutting plate (2) has, for a positive connection with the tool head (3), a top holding catch (13) which elongates the edge of the cutting plate (2) opposing the cutting edge (2') relatively to the side edge of the cutting plate (2) projecting in the direction of the cover (15), and the longitudinal slit extends until below the cover (15), the top holding catch (13) arranged in the longitudinal slit gripping under the cover (15).

18. Tool according to claim 17, **characterised in that** it has at least one circular tension spring (14) which embraces the bottom holding catch (12) or the top holding catch (13) and the tool head (3).

19. Tool according to one or more of the claims 2, 3 and 12 to 16, **characterised in that** in the hollow space of the tool head (3) an expansion means (8) is arranged which can press the cutting plate (2) arranged in the longitudinal slit outward radial.

20. Tool according to claim 19, **characterised in that** the expansion means (8) is formed by a taper pin with a conical surface which tapers at least in the center region in the direction of the bottom carrier body (1') and a threaded stem, which is supported on the end facing the bottom carrier body (1') in a threaded boring of the tool head (3) by means of screwing in spindle-like, the region of the taper pin facing the front of the tool head (3) having a fastening possibility for a tool, in particular a hexagon recess or a slit.

21. Tool according to one or both of the claims 19 and 20, **characterised in that** the expansion means (8) can be adjusted via an adjusting screw (16) which is accessible from the front of the tool head (3).

22. Tool according to claim 21, **characterised in that** the cutting disc (2) projects in the cylindrically shaped hollow space of the tool head (3), and the expansion means (8) is formed by a truncated cone guided in the cylindrical hollow space, the axial position of which can be adjusted within the hollow space via the adjusting screw (16).

23. Tool according to claim 22, **characterised in that** the truncated cone has a through boring through which the adjusting screw (16) is guided with play, the adjusting screw (16) being screwed in on the side opposite to the front of the tool head (3) in a threaded boring.

24. Tool according to claim 23, **characterised in that** a helical spring, penetrated by the adjusting screw (16) and serving as restoring spring, is arranged between the truncated cone serving as expansion means (8) and the threaded boring.

25. Tool according to one or more of the claims 19, 20 and 21, **characterised in that** the position of the expansion means (8) relatively to the tool head (3) can be fixed by a fixing means (16), in particular by a locking screw screwed in the tool head (3).

26. Tool according to one or more of the preceding claims 19, 20, 21 and 25, **characterised in that** it has an adjusting tool with an optical marker, and an optical marker, in particular a scaling, is arranged on the front of the tool head, so that the position of the expansion means (8) can be read relatively to the tool head (3).

27. Tool according to one or more of the preceding claims, **characterised in that** it is a reamer or a milling cutter or boring tool which can be used as radial and/or front tool.

## Revendications

1. Outil et plus particulièrement outil d'usinage coupant et abrasant, possédant plusieurs lames coupantes (2) orientées vers une pièce à usiner et fixées sur un porte-outil (1) et dont chacune possède un fil coupant (2') se déplaçant lors du mouvement rotatif de l'outil par-dessus la surface de la pièce à usiner, les lames coupantes (2) étant introduites dans des fentes longitudinales de réception (6) du porte-outil et fixées par des moyens de serrage, **caractérisé en ce qu'**un moyen de serrage commun (7) est prévu pour la fixation de plusieurs ou de toutes les lames coupantes (2) exerçant une pression sur la fente de réception (6) perpendiculairement à l'orientation de la lame coupante (2) et resserrant ainsi en raison de la pression exercée les fentes longitudinales enserrant les lames coupantes (2).

2. Outil selon la revendication 1, **caractérisé en ce que** le porte-outil (1) possède un corps inférieur de support (1') et une tête d'outil (3) en forme de corps creux dont une extrémité (5), ayant une forme similaire à celle d'un corps d'outil, est introduite dans un creux de réception (4) sur la face frontale du porte-outil (1) et **en ce que** la fente de réception (6) consiste en une fente longitudinale et ininterrompue située dans la tête de l'outil 3 et allant jusqu'au creux de réception (4).

3. Outil selon la revendication 2, **caractérisé en ce que** le moyen de serrage consiste en une vis de serrage (7) et un creux de réception frontale (4) et **en ce que** le corps inférieur de support (1') est lié à la tête d'outil (3) via la vis de serrage (7), faisant que le corps (5) est introduit en force dans le creux de réception frontale (4) exerçant ainsi une pression radiale de ce creux de réception frontale (4) sur le corps (5) comprimant la fente longitudinale et serrant ainsi la lame coupante (2) située dans ladite fente.

4. Outil selon une ou plusieurs des revendications précédentes, **caractérisé en ce qu'**il possède des fils coupants (2') orientés parallèlement à l'axe de rotation de l'outil.

5. Outil selon une ou plusieurs des revendications précédentes, **caractérisé en ce qu'**il possède au moins un fil coupant (2'') au niveau de sa face frontale et orienté soit perpendiculairement à l'axe de rotation de l'outil soit selon un angle compris entre 0° et 90° degrés par rapport à cet axe de rotation.

6. Outil selon une ou plusieurs des revendications précédentes, **caractérisé en ce qu'**il possède plusieurs lames coupantes (2) distribuées sur la circonférence de la tête d'outil (3) de manière équidistante.

7. Outil selon la revendication 3, **caractérisé en ce que** le corps (5) possède la forme d'un tronc conique et **en ce que** la vis de serrage (7) est située de façon concentrique par rapport au corps.

8. Outil selon une ou deux des revendications 3 et 7, **caractérisé en ce que** le creux de réception frontale (4) du corps (5) consiste en un trou de perçage conique dont le diamètre intérieur diminue au niveau de l'emplacement de la vis de serrage (7).

9. Outil selon une ou plusieurs des revendications 3, 7 et 8, **caractérisé en ce que** le corps inférieur de support (1') consiste principalement en un cylindre creux donc symétrique par rapport à un axe de rotation et **en ce que** la vis de serrage (7) située dans ce corps inférieur de support (1') de manière à pouvoir effectuer un mouvement de rotation, possède à son extrémité au niveau de la tête d'outil (3) un filetage extérieur correspondant à un filetage intérieur dans la tête d'outil (3) et à l'autre extrémité une possibilité d'interaction avec un outil de vissage.

10. Outil selon une ou plusieurs des revendications précédentes 3 et 7 à 9, **caractérisé en ce que** la vis de serrage (7) possède une tête de vis et **en ce que** le corps inférieur de support (1') possède un perçage pour le maintien pivotable de la vis de serrage (7), dont le diamètre intérieur augmente abruptement en allant vers le côté opposé de la tête d'outil, formant ainsi une butée perpendiculaire à l'axe de perçage contre laquelle la vis de serrage (7) peut s'appuyer lors du serrage.

11. Outil selon la revendication 10, **caractérisé en ce qu'**il existe un filetage intérieur soit au niveau de la zone du perçage intérieur abruptement élargi soit tout au moins au niveau de son extrémité, afin de pouvoir y visser un bouchon (17) qui empêche que la vis de serrage puisse tomber lorsque la tête d'outil est dévissée.

12. Outil selon les deux revendications 2 et 3, **caractérisé en ce que** la tête d'outil (3) possède au niveau de la partie supérieure de son corps une forme approximative de cylindre creux dont le diamètre extérieur correspond à celui du diamètre extérieur de la zone proche du corps inférieur de support (1') et **en ce que** les surfaces extérieures de la tête d'outil (3) et du corps inférieur de support (1') portent des gorges (10) d'évacuation de copeaux rectilignes ou courbes.

13. Outil selon une des revendications 2, 3 et 12, **caractérisé en ce que** le corps inférieur de support (1') possède un moyen de centrage (9) ayant en particulier la forme d'une tige et **en ce que** la tête d'outil (3) possède un moyen de réception pour ce dispositif de centrage (9) définissant la position de la tête d'outil (3) par rapport au corps inférieur de support (1').

14. Outil selon une des revendications 2, 3, 12 et 13, **caractérisé en ce que** la lame coupante (2) possède un bord de maintien inférieur (12) prolongeant longitudinalement le bord opposé à celui du fil coupant (2') vers le corps inférieur de support (1') afin d'améliorer son maintien par le support du porte-outil (1) et **en ce que** le bord latéral de la lame coupante (2) s'approche de la face frontale du corps inférieur de support (1') lors de la fixation de la tête d'outil (3) faisant que le bord de maintien inférieur (12), situé à l'intérieur de la fente de fixation, soit couvert par le corps inférieur de support (1').

15. Outil selon une des revendications 2, 3 et 12 à 14, **caractérisé en ce qu'**il existe un évidement (18) et un bord de centrage (19), permettant le centrage de la lame coupante (2) en direction de l'axe de rotation et **en ce que** le bord de centrage (19) situé soit sur la lame coupante (2) soit sur la tête d'outil (3), rentre dans l'évidement (18) lors de l'introduction de la lame coupante (2) dans la fente de réception (6).

16. Outil selon une ou plusieurs des revendications 2, 3 et 12 à 15, **caractérisé en ce que** la tête d'outil (3) possède un cache (15) vissé sur la face frontale à l'extrémité, au-delà des lames coupantes (2), dont le diamètre extérieur est inférieur à celui du cercle décrit par le mouvement de rotation des fils coupants (2').

17. Outil selon la revendication 16, **caractérisé en ce que** la lame coupante (2) possède un bord de maintien supérieur (13) prolongeant longitudinalement le bord opposé à celui du fil coupant (2') vers le cache (15) afin d'améliorer son maintien par la tête d'outil (3) en étant située dans la fente de réception 6 qui s'étend jusqu'en dessous du cache (15) et **en ce que** le bord de maintien supérieur (13) est situé sous ce cache (15).

18. Outil selon la revendication 17, **caractérisé en ce qu'**il comporte au moins un bord de maintien inférieur (12) ou un bord de maintien supérieur (13) et un ressort circulaire de serrage (14).

19. Outil selon une ou plusieurs des revendications 2, 3 et 12 à 16, **caractérisé en ce qu'**un moyen d'écartement (8) est situé à l'intérieur creux de la tête d'outil (3) permettant de pousser la lame coupante (2), située dans la fente longitudinale, vers l'extérieur en direction radiale.

20. Outil selon la revendication 19, **caractérisé en ce que** le moyen d'écartement (8) consiste en un cône allongé dont au moins une partie, située entre son milieu et son extrémité proche du corps inférieur de support, possède des diamètres extérieurs diminuant vers l'extrémité inférieure et se termine par une tige filetée qui permet de le fixer en la vissant dans un perçage taraudé, réalisé dans l'extrémité de la tête d'outil (3), située à proximité du corps inférieur de support (1'), et **en ce qu'**il existe au niveau de la face frontale du cône (8), située au niveau de la face frontale de la tête d'outil (3), une possibilité d'interaction avec un outil de vissage et en particulier une fente ou un évidement pour une clef à six pans.

21. Outil selon une ou deux des revendications 19 et 20, **caractérisé en ce que** le moyen d'écartement (8) peut être ajusté à l'aide d'une vis de réglage (16) accessible par la face frontale de la tête d'outil (3).

22. Outil selon la revendication 21, **caractérisé en ce que** la lame coupante (2) rentre dans l'évidement cylindrique situé à l'intérieur de la tête d'outil (3) et **en ce que** le moyen d'écartement (8) est formé par le tronc de cône, guidé par l'évidement cylindrique, et dont la position axiale à l'intérieur de l'évidement peut être ajustée à l'aide d'une vis de réglage (16).

23. Outil selon la revendication 22, **caractérisé en ce que** le tronc de cône possède un perçage d'une extrémité à l'autre guidant, avec du jeu, la vis de réglage (16) qui est vissée dans un perçage taraudé dans la tête d'outil (3), situé sur l'extrémité opposée de sa face frontale.

24. Outil selon la revendication 23, **caractérisé en ce qu'**il existe un ressort, utilisé comme ressort de rappel, traversé par la vis de réglage (16) et situé entre le perçage taraudé et le tronc de cône (8), qui est utilisé comme moyen d'écartement.

25. Outil selon une ou plusieurs des revendications 19, 20 et 21, **caractérisé en ce que** la position du moyen d'écartement (8) par rapport à la tête d'outil (3) peut être fixée à l'aide un moyen d'arrêt (16) et en particulier à l'aide d'une vis de fixation, vissée dans la tête d'outil (3).

26. Outil selon une ou plusieurs des revendications 19, 20, 21 et 25, **caractérisé en ce qu'**il comporte un dispositif de réglage avec un marquage visuel, comme une échelle graduée, situé au niveau de la face frontale de la tête d'outil et permettant ainsi de relever la position du moyen d'écartement (8) par rapport à la tête d'outil (3).

27. Outil selon une ou plusieurs des revendications précédentes, caractérisé en qu'il représente un alésoir ou un outil de fraisage et de perçage, utilisable comme une tête de fraiseuse radiale ou frontale.
